# EUROPÄISCHE PATENTSCHRIFT

(11) **EP 4 078 823 B1**
(45) Veröffentlichungstag und Bekanntmachung des Hinweises auf die Patenterteilung: **30.07.2025**
(21) Anmeldenummer: 20808017.6
(22) Anmeldetag: 11.11.2020
(51) Int. Cl.: H04B 5/77, G05B 19/042, H04B 5/20

(54) **SYSTEM MIT EINEM MOBILEN KOMMUNIKATIONSGERÄT UND IN EINEM SCHALTSCHRANK ANGEORDNETEN ELEKTROGERÄTEN UND VERFAHREN ZUM BETREIBEN EINES SYSTEMS**
SYSTEM HAVING A MOBILE COMMUNICATION DEVICE AND ELECTRIC DEVICES IN A CABINET AND METHOD FOR OPERATING A SYSTEM
SYSTÈME COMPRENANT UN APPAREIL DE COMMUNICATION MOBILE ET DES APPAREILS ÉLECTRIQUES DANS UNE ARMOIRE ÉLECTRIQUE ET PROCÉDÉ POUR FAIRE FONCTIONNER UN TEL SYSTÈME

(30) Priorität: 20.12.2019 DE 102019008924
(43) Veröffentlichungstag der Anmeldung: 26.10.2022
(73) Patentinhaber: SEW-EURODRIVE GmbH & Co. KG, 76646 Bruchsal (DE)
(72) Erfinder: BOSCHERT, Thomas, 76227 Karlsruhe (DE)
(86) Internationale Anmeldenummer: PCT/EP2020/025507
(87) Internationale Veröffentlichungsnummer: WO 2021/121649

(56) Entgegenhaltungen:
- WO-A1-2016/150410
- US-A1- 2009 036 056
- US-A1- 2014 218 178
- US-A1- 2017 123 740

## Beschreibung

Die Erfindung betrifft ein System mit einem mobilen Kommunikationsgerät und in einem Schaltschrank stationär angeordneten Elektrogeräten und ein Verfahren zum Betreiben eines Systems.

Es ist allgemein bekannt, dass ein Speichermodul, wie RFID-Tag, berührungslos von einem Lesegerät auslesbar ist, wenn das Lesegerät innerhalb der zur zugehörigen Funkwellenübertragung zugehörigen Reichweite angeordnet ist.

Außerdem ist als Funkschnittstelle eine Bluetooth-Schnittstelle allgemein bekannt.

Aus der US 2015/0046125 A1 ist ein Verfahren zur Bedienung eines Feldmoduls bekannt.

Aus der US 2018/0049257 A1 ist ein Steuerungsverfahren für eine schnelle Verbindung und Datenübertragung zwischen Geräten bekannt.

**Aus der** US 2014 / 218178 A1 **ist als nächstliegender Stand der Technik eine Überwachungsmaschine mit einem tragbaren Terminal bekannt.**

**Aus der** US 2017 / 123740 A1 **ist ein mobiles Terminal bekannt, das eine kabellose Kommunikation durchführt und eine Steuerverfahren hierfür bekannt.**

Der Erfindung liegt daher die Aufgabe zugrunde, die Sicherheit beim Betreiben einer industriellen Anlage weiterzubilden.

Erfindungsgemäß wird die Aufgabe bei dem System nach den in Anspruch 1 und bei dem Verfahren nach den in Anspruch 4 angegebenen Merkmalen gelöst.

Wichtige Merkmale der Erfindung bei dem System mit einem mobilen Kommunikationsgerät und insbesondere stationär angeordneten Elektrogeräten sind, dass jedes der Elektrogeräte jeweils eine ein erstes Frequenzband verwendende Funkschnittstelle aufweist, mittels welcher eine Datenaustauschverbindung mit dem mobilen Kommunikationsgerät vorsehbar ist,
wobei in oder an jedem der Elektrogeräte jeweils zumindest ein Speichermodul angeordnet ist, dessen Daten berührungslos, insbesondere mittels elektromagnetischer Wellen, vom mobilen Kommunikationsgerät auslesbar sind, wobei elektromagnetische Wellen eines zweiten Frequenzbandes verwendet werden,
wobei die Reichweite für das berührungslose Auslesen von Daten des Speichermoduls mittels des mobilen Kommunikationsgeräts derart gering und die Elektrogeräte, insbesondere die Speichermodule, derart weit entfernt voneinander angeordnet sind, dass kein Überlapp der Reichweiten vorhanden ist und/oder dass vom mobilen Kommunikationsgerät nur ein einziges Speichermodul auslesbar ist.

Von Vorteil ist dabei, dass eine industrielle Anlage, welche mehrere Elektrogeräte aufweist, die alle eine Bluetooth-Schnittstelle aufweisen, mit einer erhöhten Sicherheit in Betrieb nehmbar und betreibbar ist. Dabei ist bei der Inbetriebnahme ein Elektrogerät parametrierbar, indem ein mobiles Kommunikationsgerät in die Reichweite der Bluetooth-Schnittstelle, insbesondere Funkschnittstelle, bringbar ist. Auch wenn das Kommunikationsgerät innerhalb der Reichweite mehrerer Funkschnittstellen angeordnet ist, wird durch den erfindungsgemäßen Betrieb eine Fehlparametrierung vermieden. Denn das zu parametrierende Gerät ist eindeutig auswählbar und erkennbar, so dass mittels der Funkschnittstelle eine Datenaustauschverbindung ausschließlich zu dem zu parametrierenden Elektrogerät aufgebaut wird. Erfindungsgemäß wird hierzu eine Identifizierungsinformation ausgelesen aus dem Speichermodul, das bei Herstellung des Elektrogeräts mit dem Elektrogerät verbunden, insbesondere klebeverbunden, wird. Dabei kann das Kommunikationsgerät nur dasjenige Speichermodul der Elektrogeräte auslesen, in dessen Reichweite es angeordnet ist. Die Reichweiten der Funkverbindungen vom Kommunikationsgerät zu den anderen Speichermodulen ist derart gering, dass das Kommunikationsgerät außerhalb der Reichweite dieser anderen Speichermodule sich befindet. Ein Überlapp der Reichweiten der Speichermodule ist nicht vorhanden.

Der Einfachheit halber wird hier stets von der Reichweite des Speichermoduls gesprochen, wobei diese selbstverständlich auch von der Sendeleistung und Empfangsempfindlichkeit des mobilen Kommunikationsgeräts abhängig ist. Für die Erfindung wird davon ausgegangen, dass die Sendeleistung und Empfangsempfindlichkeit des mobilen Kommunikationsgeräts derart eingerichtet ist, dass die Reichweiten der vom Kommunikationsgerät zu den Speichermodulen gerichtete Übertragungen nicht überlappen. Es ist also ausschließlich ermöglicht, dass das mobile Kommunikationsgerät nur das Speichermodul keines oder höchstens eines einzigen Speichermoduls auszulesen vermag.

Bei einer vorteilhaften Ausgestaltung ist das mobile Kommunikationsgerät innerhalb der Reichweiten der, insbesondere aller, Elektrogeräte angeordnet ist, insbesondere also wahlweise mit jedem der Elektrogeräte eine Datenaustauschverbindung aufbaubar ist. Von Vorteil ist dabei, dass das Kommunikationsgerät zwar innerhalb der Reichweite der Elektrogeräte sich befindet und somit zu allen eine Datenaustauschverbindung aufbauen kann, aber nur diejenige Datenaustauschverbindung wird aufgebaut, welche mittels der zuvor von dem Speichermodul ausgelesenen Identifizierungsinformation identifiziert wurde. Die Eineindeutigkeit wird also durch die zuvor ausgeführte Kommunikation mit dem Speichermodul sichergestellt.

Alternativ, jedoch außerhalb der beanspruchten Erfindung, weist das mobile Kommunikationsgerät ein Mittel zum Bestimmen der Amplitude oder des Effektivwerts der von den die jeweiligen Speichermodule aufweisenden Elektrogeräten ausgesendeten elektromagnetische Wellen des zweiten Frequenzbandes auf, wobei das Mittel nur das Auslesen desjenigen Speichermoduls freigibt, welches in oder an demjenigen Elektrogerät angeordnet ist, das die elektromagnetische Wellen des zweiten Frequenzbandes mit der größten Amplitude oder mit dem größten Effektivwert aussendet. Von Vorteil ist dabei, dass nur dasjenige Speichermodul ausgelesen wird, dessen Elektrogerät die größte Amplitude aussendet beziehungsweise von dessen Elektrogerät das Kommunikationsgerät die größte Amplitude empfängt. Somit wird wiederum nur ein einziges Speichermodul ausgelesen. Die Zuordnung ist also eindeutig, insbesondere durch den geringsten Abstand zwischen dem Kommunikationsgerät und dem Speichermodul im Vergleich zu den anderen Abständen, insbesondere zwischen Kommunikationsgerät und den anderen Elektrogeräten.

Weiter alternativ, jedoch ebenfalls außerhalb der beanspruchten Erfindung, weist das Kommunikationsgerät ein Mittel zum Anzeigen der auslesbaren Speichermodule auf, das ein Zunehmen der vom Kommunikationsgerät detektierten Amplitude erkennt, insbesondere bei weiterer Annäherung des Kommunikationsgeräts zu einem ersten der Elektrogeräte hin, und davon abhängig ein weiteres Auslesen desjenigen Speichermoduls freigibt, welches in oder an dem ersten Elektrogerät angeordnet ist, das die elektromagnetischen Wellen des zweiten Frequenzbandes aussendet, deren vom Kommunikationsgerät empfangenen Amplitude oder Effektivwert zunimmt, insbesondere beim Annähern zunimmt. Von Vorteil ist dabei, dass ein Quittieren von Auslese-Möglichkeiten durch Annähern des Kommunikationsgeräts an eines der Elektrogeräte ausführbar ist. Wenn also vom Mittel zum Anzeigen zwei oder mehr Speichermodule angezeigt werden, mit denen im zweiten Frequenzband ein Auslesen ausführbar wäre, wird die Auswahl nicht durch eine Eingabemittel am Kommunikationsgerät sondern durch Annähern des Kommunikationsgeräts an das ausgewählte Elektrogerät ermöglicht. Hierzu wird der zeitliche Verlauf der vom Kommunikationsgerät empfangenen Amplitude beziehungsweise des vom Kommunikationsgerät empfangenen Effektivwerts ausgewertet, insbesondere nach dem Zeitpunkt des Beginns des Anzeigens der auslesbaren Speichermodule. Wenn dabei ein zunehmen detektiert wird, wird das entsprechende Speichermodul danach ausgelesen und dann im ersten Frequenzband ein Datenaustausch zwischen dem entsprechenden Speichermodul und dem Kommunikationsgerät ausgeführt.

Bei einer vorteilhaften Ausgestaltung ist das erste Frequenzband vom zweiten Frequenzband beabstandet und/oder weist das ersten Frequenzband zum zweiten Frequenzband einen nicht verschwindenden Frequenzabstand auf. Von Vorteil ist dabei, dass nicht nur datentechnisch, sondern auch physikalisch eine Separierung der entsprechenden Kommunikationskanäle ausgeführt wird.

Bei einer vorteilhaften Ausgestaltung ist die Funkschnittstelle eine Bluetooth-Schnittstelle und/oder eine WLAN-Schnittstelle,
wobei das mobile Kommunikationsgerät eine derart hierzu kompatible Bluetooth-Schnittstelle und/oder eine WLAN-Schnittstelle aufweist, dass eine Datenaustauschverbindung aufbaubar ist. Von Vorteil ist dabei, dass eine kostengünstige Realisierung erreichbar ist.

Bei einer vorteilhaften Ausgestaltung ist das Speichermodul als RFID-Tag oder als NFC-Tag ausgeführt,
wobei das mobile Kommunikationsgerät derart geeignet ausgeführt ist, dass es als Lesegerät für diesen Tag betreibbar ist. Von Vorteil ist dabei, dass ein Massenprodukt verwendbar ist und somit kostengünstig realisierbar ist.

Wichtige Merkmale bei dem Verfahren zum Betreiben eines Systems sind, dass das System Elektrogeräte und ein mobiles Kommunikationsgerät aufweist,
wobei jedes Elektrogerät eine in einem ersten Frequenzband betreibbare Funkschnittstelle zum Aufbauen und Betreiben einer Datenaustauschverbindung zwischen dem jeweiligen Elektrogerät und dem mobilen Kommunikationsgerät aufweist,
wobei in einem ersten Verfahrensschritt an oder in jedem Elektrogerät ein vom mobilen Kommunikationsgerät ein zweites Frequenzband nutzend berührungslos auslesbares Speichermedium befestigt wird, insbesondere aufgeklebt wird,
wobei in einem zweiten Verfahrensschritt das mobile Kommunikationsgerät innerhalb der Reichweite des Speichermediums eines ersten Elektrogeräts angeordnet wird, so dass das mobile Kommunikationsgerät außerhalb der Reichweiten aller anderer Speichermedien angeordnet wird. Von Vorteil ist dabei, dass eine eineindeutige Kommunikation aufbaubar ist.

Denn es ist nur ein einziges Speichermodul auslesbar. Da das Speichermodul bei Fertigung des Elektrogeräts mit diesem mechanisch verbunden, insbesondere klebeverbunden, wird und mit der zum gefertigten Elektrogerät zugehörigen Identifizierungsinformation beaufschlagt wird, ist eine Zuordnung der Identifizierungsinformation zum Elektrogerät sicher gewährleistbar. Wenn also die Reichweite des Speichermoduls derart gering ist, dass nur bei Anordnen des Kommunikationsgeräts am Elektrogerät die Identifizierungsinformation auslesbar ist, ist sicher gewährleistbar, dass nicht eine Identifizierungsinformation eines anderen Elektrogeräts ausgelesenen wird.

Vorzugsweise sind die Elektrogeräte in einer geraden Linie hintereinander in einem Schaltschrank angeordnet oder zumindest entlang einer Ebene angeordnet. Vorzugsweise ist die Reichweite der Datenübertragung zwischen dem Kommunikationsgerät und dem Speichermodul kleiner als der Abstand zwischen dem Kommunikationsgerät und dem Speichermodul.

in einem dritten Verfahrensschritt das mobile Kommunikationsgerät innerhalb der Reichweite mehrerer oder aller Funkschnittstellen der Elektrogeräte angeordnet ist und die Datenaustauschverbindung zwischen dem mobilen Kommunikationsgerät und dem ersten Elektrogerät aufgebaut und betrieben wird, insbesondere zur Parametrierung des ersten Elektrogeräts. Von Vorteil ist dabei, dass das Kommunikationsgerät innerhalb der Reichweite anordenbar ist und somit eine verbesserte Ergonomie bei der Parametrierung erreichbar ist.

Alternativ bestimmt im zweiten Verfahrensschritt das mobile Kommunikationsgerät die Amplitude oder den Effektivwert der von den die jeweiligen Speichermodule aufweisenden Elektrogeräten ausgesendeten elektromagnetische Wellen des zweiten Frequenzbandes, wobei nur das Auslesen desjenigen Speichermoduls freigegeben wird, welches in oder an demjenigen Elektrogerät angeordnet ist, das die elektromagnetischen Wellen des zweiten Frequenzbandes mit der größten Amplitude oder mit dem größten Effektivwert aussendet. Somit ist eine eineindeutige Erkennung des nächstgelegenen Elektrogeräts ermöglicht, so dass dann ausschließlich mit diesem Elektrogerät der nachfolgende Datenaustausch im ersten Frequenzband ausgeführt wird, wobei zuvor das zugehörige Speichermodul ausgelesen wird.

Weiter alternativ zeigt im zweiten Verfahrensschritt das Kommunikationsgerät die auslesbaren Speichermodule an, insbesondere Identifizierungsinformation der auslesbaren Speichermodule, und erkennt ein Zunehmen der vom Kommunikationsgerät detektierten Amplitude, insbesondere bei weiterer Annäherung des Kommunikationsgeräts zu einem ersten der Elektrogeräte hin, und davon abhängig ein weiteres Auslesen desjenigen Speichermoduls freigibt, welches in oder an dem ersten Elektrogerät angeordnet ist, das die elektromagnetischen Wellen des zweiten Frequenzbandes aussendet, deren vom Kommunikationsgerät empfangene Amplitude oder Effektivwert zunimmt, insbesondere beim Annähern zunimmt.

Bei einer vorteilhaften Ausgestaltung wird im ersten Verfahrensschritt eine Identifizierungsinformation, insbesondere Identcode, von einem Schreibgerät ins Speichermedium berührungslos übertragen. Von Vorteil ist dabei, dass das Beschreiben in einfacher Weise an einem Fließband derjenigen industriellen Anlage ausführbar ist, in welcher das Elektrogerät gefertigt wird. Das Schreibgerät muss nur in der Nähe des Fließbandes angeordnet werden und somit dem Elektrogerät seine Identifizierungsinformation übergeben werden.

Bei einer vorteilhaften Ausgestaltung wird im zweiten Verfahrensschritt die Identifizierungsinformation vom mobilen Kommunikationsgerät aus dem Speichermedium ausgelesen. Von Vorteil ist dabei, dass nach Auslieferung des Elektrogerätes und Einbau desselben in eine weitere industrielle Anlage die Parametrierung in einfacher und sicherer Weise ausführbar ist.

Bei einer vorteilhaften Ausgestaltung weist das erste Elektrogerät einen Wechselrichter auf, welcher einen Elektromotor speist. Von Vorteil ist dabei, dass die Parametrierung in einfacher und sicherer Weise ausführbar ist und die an den Wechselrichter übertragenen Parameter auf den Motor abstimmbar sind.

Bei einer vorteilhaften Ausgestaltung ist das mobile Kommunikationsgerät ein Smartphone oder ein Tablet. Von Vorteil ist dabei, dass ein vorhandenes Gerät nutzbar ist. Somit sind keine zusätzlichen Beschaffungskosten notwendig. Die Erfindung ist somit einfach und kostengünstig ausführbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

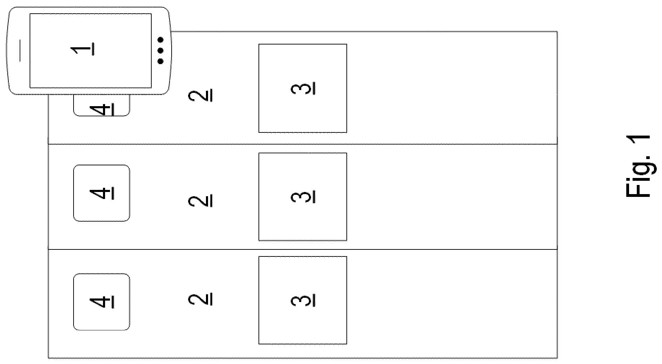

In der Figur 1 ist ein erfindungsgemäßes System mit einem mobilen Kommunikationsgerät 1, insbesondere Smartphone oder Tablet, und in einem Schaltschrank stationär angeordneten Elektrogeräten 2 dargestellt, wobei das mobile Kommunikationsgerät 1 in einem Nahfeldbereich eines zum Datenaustausch befähigten Speichermoduls 4 angeordnet wird.

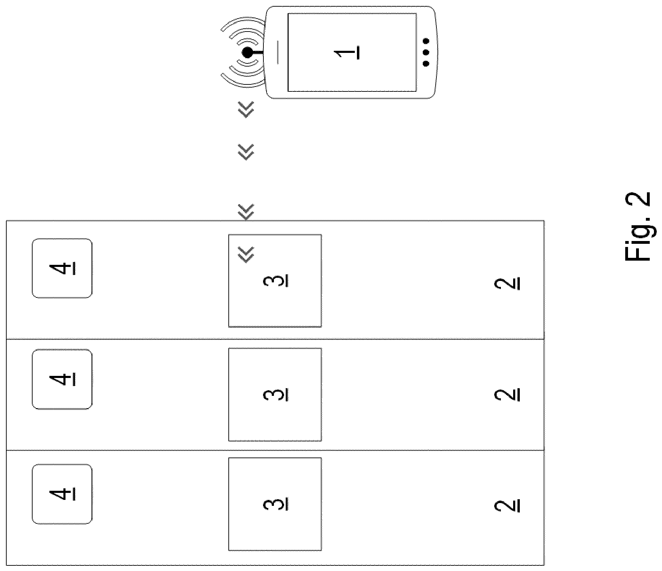

In der Figur 2 ist im Unterschied zur Figur 1 das mobile Kommunikationsgerät 1 zum Datenaustausch mit einer Funkschnittstelle 3 eines ersten der Elektrogeräte 2 verbunden ist.

Wie in den Figuren gezeigt, sind die Elektrogeräte 2 stationär in einem Schaltschrank angeordnet.

Ein erstes der Elektrogeräte 2 ist als Versorgungsmodul ausgeführt, das somit einen vom Öffentlichen Wechselspannungsversorgungsnetz gespeisten AC/DC-Wandler, insbesondere Gleichrichter, aufweist und eine Gleichspannung den anderen Elektrogeräten zur Verfügung stellt.

Diese anderen der Elektrogeräte 2 weisen jeweils einen Wechselrichter auf, der einen jeweiligen Elektromotor speist.

Jedes der Elektrogeräte weist eine Funkschnittstelle 3 auf, mittels derer Daten mit dem mobilen Kommunikationsgerät 1 austauschbar sind. Vorzugsweise ist die Funkschnittstelle 3 als Bluetooth - Schnittstelle ausgeführt.

Anfangs muss jedoch die Datenaustauschverbindung zwischen dem mobilen Kommunikationsgerät 1 und dem beispielsweise ersten Elektrogerät 2 aufgebaut werden. Da das mobile Kommunikationsgerät 1 allerdings in Reichweite der Funkschnittstellen 3 aller Elektrogeräte 2 angeordnet ist, ist eine eindeutige Identifizierung des ersten Elektrogeräts 2 notwendig.

Daher wird in einem ersten Verfahrensschritt das mobile Kommunikationsgerät 1 in Reichweite eines Speichermoduls 4 gebracht und Identifikationsinformation des ersten Elektrogeräts 2, welche bei Herstellung des ersten Elektrogeräts 2 insbesondere produktionsbegleitend in einem Langzeitspeicher des Speichermoduls 4 gespeichert wurden, ausgelesen.

Mit der so erhaltenen Identifikationsinformation wird eine Datenaustauschverbindung zum ersten Elektrogerät 2 gezielt aufgebaut. Denn das mobile Kommunikationsgerät 1 ist innerhalb der Reichweite der Funkschnittstellen 3 aller Elektrogeräte 2 angeordnet und könnte mit jeder der Funkschnittstellen 3 der Elektrogeräte 2 eine Datenaustauschverbindung aufbauen. Mittels der erhaltenen Identifikationsinformation ist das mobile Kommunikationsgerät 1 in der Lage, die Datenaustauschverbindung ausschließlich mit der Funkschnittstelle des ersten Elektrogeräts aufzubauen.

Nachfolgend wird beispielsweise eine Parametrierung des ersten Elektrogeräts vom mobilen Kommunikationsgerät aus durchgeführt. Dies ist beispielsweise bei einer Inbetriebnahme notwendig, bei welcher noch viele Parameter des ersten Elektrogeräts 2 eingegeben werden müssen, um einen geregelten Betrieb des Elektromotors ausführen zu können und/oder um eine vorgesehene Anwendung auszuführen.

Mit einer Anwendung ist hier der vorgesehene Einsatz und Betriebsablauf eines Elektromotors in einer Maschine oder Anlage gemeint.

Außerdem ist über die Datenaustauschverbindung auch während des Betriebs des ersten Elektrogeräts 2 ein Parameter des ersten Elektrogeräts 2 veränderbar oder es sind Messwerte, wie erfasste Strom- und/oder Spannungswerte, vom ersten Elektrogerät 2 aus übertragbar und mittels eines Anzeigemittels anzeigbar oder mit einem Auswertemittel auswertbar.

Als Speichermodul 4 ist vorzugsweise ein NFC-Tag oder ein RFID-Tag verwendbar.

Der Datenaustausch zwischen dem mobilen Kommunikationsgerät 1 und dem Speichermodul 4 ist in einem zweiten Frequenzbereich vorgesehen.

Der Datenaustausch zwischen dem mobilen Kommunikationsgerät 1 und der Funkschnittstelle 3 ist in einem ersten Frequenzbereich vorgesehen, der beabstandet ist zum ersten Frequenzbereich, insbesondere also einen Frequenzabstand aufweist zum ersten Frequenzbereich.

Bei weiteren erfindungsgemäßen Ausführungsbeispielen ist die Funkschnittstelle 3 als Bluetooth-Schnittstelle ausgeführt und das Speichermodul als ein RFID-Tag oder NFC-Tag.

Bei weiteren, jedoch nicht beanspruchten, Ausführungsbeispielen wir bei Detektion von mehreren auslesbaren Speichermodulen dasjenige ausgewählt, welches eine höhere Empfangsamplitude beim Kommunikationsgerät bewirkt und somit näher angeordnet ist. Der nachfolgende datenaustausch erfolgt dann im ersten Frequenzband mit dem diesem Speichermodul zugeordneten Elektrogerät.

### Bezugszeichenliste

1 mobiles Kommunikationsgerät, insbesondere Smartphone oder Tablet
2 Elektrogerät, wie Achsmodul oder Versorgungsmodul
3 Funkschnittstelle
4 Speichermodul

## Patentansprüche

1. System mit einem mobilen Kommunikationsgerät und **in einem Schaltschrank** stationär angeordneten Elektrogeräten,
wobei jedes der Elektrogeräte jeweils eine ein erstes Frequenzband verwendende Funkschnittstelle aufweist, mittels welcher eine Datenaustauschverbindung mit dem mobilen Kommunikationsgerät vorsehbar ist, insbesondere betreibbar ist,
**wobei** in oder an jedem der Elektrogeräte jeweils zumindest ein Speichermodul angeordnet ist, dessen Daten berührungslos vom mobilen Kommunikationsgerät auslesbar sind, wobei elektromagnetische Wellen eines zweiten Frequenzbandes verwendet werden,
wobei
die Reichweite für das berührungslose Auslesen von Daten des Speichermoduls mittels des mobilen Kommunikationsgeräts derart gering und die Elektrogeräte, insbesondere die Speichermodule, derart weit entfernt voneinander angeordnet sind, dass kein Überlapp der Reichweiten vorhanden ist und/oder dass vom mobilen Kommunikationsgerät nur ein einziges Speichermodul auslesbar ist,
**wobei der Abstand zwischen jeweils zwei der Elektrogeräte größer ist als das Doppelte der Reichweite,**
**wobei das mobile Kommunikationsgerät innerhalb der auf die Funkschnittstelle bezogenen Reichweiten aller Elektrogeräte angeordnet ist, also wahlweise mit jedem der Elektrogeräte eine Datenaustauschverbindung aufbaubar ist.**

2. System nach einem der vorangegangenen Ansprüche,
wobei die Funkschnittstelle eine Bluetooth-Schnittstelle und/oder eine WLAN-Schnittstelle ist,
wobei das mobile Kommunikationsgerät eine derart hierzu kompatible Bluetooth-Schnittstelle und/oder eine WLAN-Schnittstelle aufweist, dass eine Datenaustauschverbindung aufbaubar ist.

3. System nach einem der vorangegangenen Ansprüche,
wobei das Speichermodul als RFID-Tag oder als NFC-Tag ausgeführt ist,
wobei das mobile Kommunikationsgerät derart geeignet ausgeführt ist, dass es als Lesegerät für diesen Tag betreibbar ist.

4. Verfahren zum Betreiben eines Systems, insbesondere nach einem der vorangegangenen Ansprüche,
wobei das System in einem Schaltschrank stationär angeordnete Elektrogeräte und ein mobiles Kommunikationsgerät aufweist,
wobei jedes Elektrogerät eine in einem ersten Frequenzband betreibbare Funkschnittstelle zum Aufbauen und Betreiben einer Datenaustauschverbindung zwischen dem jeweiligen Elektrogerät und dem mobilen Kommunikationsgerät aufweist,
wobei in einem ersten Verfahrensschritt
- an oder in jedem Elektrogerät ein vom mobilen Kommunikationsgerät ein zweites Frequenzband nutzend berührungslos auslesbares Speichermedium befestigt wird, insbesondere aufgeklebt wird,
wobei in einem zweiten Verfahrensschritt das mobile Kommunikationsgerät innerhalb der Reichweite des Speichermediums eines ersten Elektrogeräts angeordnet wird, so dass das mobile Kommunikationsgerät außerhalb der Reichweiten aller anderer Speichermedien angeordnet wird,
und in einem dritten Verfahrensschritt
- das mobile Kommunikationsgerät innerhalb der Reichweite aller Funkschnittstellen der Elektrogeräte angeordnet ist und die Datenaustauschverbindung zwischen dem mobilen Kommunikationsgerät und dem ersten Elektrogerät aufgebaut und betrieben wird, insbesondere zur Parametrierung des ersten Elektrogeräts,
**wobei im ersten Verfahrensschritt eine Identifizierungsinformation, insbesondere Identcode, von einem Schreibgerät ins Speichermedium berührungslos übertragen wird,**
**wobei im zweiten Verfahrensschritt die Identifizierungsinformation vom mobilen Kommunikationsgerät aus dem Speichermedium ausgelesen wird,**
**wobei das erste Elektrogerät einen Wechselrichter aufweist, welcher einen Elektromotor speist,**
**wobei das mobile Kommunikationsgerät ein Smartphone oder ein Tablet ist.**

## Claims

1. System comprising a mobile communication device and electrical devices immovably arranged in a switchgear cabinet,
wherein each of the electrical devices has a radio interface using a first frequency band, by means of which radio interface a data exchange link to the mobile communication device can be provided, in particular operated,
wherein at least one storage module is arranged in or on each of the electrical devices, the data of said storage module being able to be read out contactlessly by the mobile communication device, wherein electromagnetic waves in a second frequency band are used,
wherein the working range for the contactless readout of data of the storage module by means of the mobile communication device is so low, and the electrical devices, in particular the storage modules, are arranged so far away from one another, that there is no overlap of the working ranges and/or only a single storage module can be read out by the mobile communication device,
wherein the distance between each two electrical devices is more than double the working range,
wherein the mobile communication device is arranged within the working ranges of all the electrical devices in relation to the radio interface, i.e. a data exchange link can be selectively established to each of the electrical devices.

2. System according to any of the preceding claims,
wherein the radio interface is a Bluetooth interface and/or a WLAN interface, wherein the mobile communication device has a Bluetooth interface and/or a WLAN interface that is compatible therewith in such a way that a data exchange link can be established.

3. System according to any of the preceding claims,
wherein the storage module is configured as an RFID tag or as an NFC tag, wherein the mobile communication device is suitably configured such that it can be operated as a reader for said tag.

4. Method for operating a system, in particular according to any of the preceding claims,
wherein the system has electrical devices immovably arranged in a switchgear cabinet, and a mobile communication device,
wherein each electrical device has a radio interface operable in a first frequency band for establishing and operating a data exchange link between the relevant electrical device and the mobile communication device,
wherein, in a first method step,
- a storage medium that can be read out contactlessly by the mobile communication device using a second frequency band is fastened, in particular adhesively bonded, to or in each electrical device,
wherein, in a second method step,
- the mobile communication device is arranged within the working range of the storage medium of a first electrical device such that the mobile communication device is arranged outside the working ranges of all the other storage media,
and in a third method step,
- the mobile communication device is arranged within the working range of all the radio interfaces of the electrical devices, and the data exchange link is established and operated between the mobile communication device and the first electrical device, in particular in order to parameterise the first electrical device,
wherein, in the first method step, a piece of identification information, in particular an Identcode, is contactlessly transferred into the storage medium by a recorder,
wherein, in the second method step, the identification information is read out from the storage medium by the mobile communication device,
wherein the first electrical device has an inverter that feeds an electric motor,
wherein the mobile communication device is a smartphone or a tablet.

## Revendications

1. Système comprenant un appareil de communication mobile et des appareils électriques agencés de manière stationnaire dans une armoire électrique,
chacun des appareils électriques présentant une interface radio qui utilise une première bande de fréquence et au moyen de laquelle une connexion d'échange de données avec l'appareil de communication mobile peut être fournie, en particulier peut être exploitée,
respectivement au moins un module de mémoire, dont les données peuvent être lues sans contact par l'appareil de communication mobile, étant agencé dans ou au niveau de chacun des appareils électriques, des ondes électromagnétiques d'une deuxième bande de fréquence étant utilisées,
la portée pour la lecture sans contact des données du module de mémoire au moyen de l'appareil de communication mobile étant suffisamment faible, et les appareils électriques, en particulier les modules de mémoire, étant suffisamment éloignés les uns des autres, pour qu'il n'y ait pas de chevauchement des portées et/ou pour qu'un seul module de mémoire puisse être lu par l'appareil de communication mobile,
la distance entre respectivement deux des appareils électriques étant supérieure au double de la portée,
l'appareil de communication mobile étant agencé en deçà de la portée de tous les appareils électriques par rapport à l'interface radio, c'est-à-dire qu'une connexion d'échange de données peut être établie au choix avec chacun des appareils électriques.

2. Système selon l'une quelconque des revendications précédentes,
l'interface radio étant une interface Bluetooth et/ou une interface WLAN,
l'appareil de communication mobile présentant une interface Bluetooth, et/ou une interface WLAN, compatible de telle manière qu'une connexion d'échange de données peut être établie.

3. Système selon l'une quelconque des revendications précédentes,
le module de mémoire étant mis en œuvre sous la forme d'une étiquette RFID ou d'une étiquette NFC,
l'appareil de communication mobile étant mis en œuvre de manière à pouvoir être utilisé comme appareil de lecture de ladite étiquette.

4. Procédé de fonctionnement d'un système, en particulier selon l'une quelconque des revendications précédentes,
le système comprenant des appareils électriques, agencés de manière stationnaire dans une armoire électrique, et un appareil de communication mobile,
chaque appareil électrique présentant une interface radio pouvant être utilisée dans une première bande de fréquence afin d'établir et d'exploiter une connexion d'échange de données entre l'appareil électrique respectif et l'appareil de communication mobile, où, dans une première étape de procédé
- un support de stockage pouvant être lu sans contact par l'appareil de communication mobile en utilisant une deuxième bande de fréquence est fixé, en particulier collé, au niveau de ou dans chaque appareil électrique,
où, dans une deuxième étape de procédé
- l'appareil de communication mobile est agencé en deçà de la portée du support de stockage d'un premier appareil électrique, de sorte que l'appareil de communication mobile est agencé au-delà de la portée de tous les autres supports de stockage,
et où, dans une troisième étape de procédé
- l'appareil de communication mobile est agencé en deçà de la portée de toutes les interfaces radio des appareils électriques et la connexion d'échange de données entre l'appareil de communication mobile et le premier appareil électrique est établie et exploitée, en particulier en vue du paramétrage du premier appareil électrique,
une information d'identification, en particulier un code d'identification, étant transmise sans contact d'un appareil d'écriture au support de stockage au cours de la première étape de procédé,
les informations d'identification étant lues par l'appareil de communication mobile à partir du support de stockage au cours de la deuxième étape de procédé,
le premier appareil électrique présentant un onduleur qui alimente un moteur électrique,
l'appareil de communication mobile étant un smartphone ou une tablette.
